# EUROPÄISCHE PATENTSCHRIFT

(11) **EP 3 578 241 B1**
(45) Veröffentlichungstag und Bekanntmachung des Hinweises auf die Patenterteilung: **01.09.2021**
(21) Anmeldenummer: 18175971.3
(22) Anmeldetag: 05.06.2018
(51) Int. Cl.: B01D 33/067, B01D 33/09, B01D 33/74, B01D 33/80, B01D 35/30

(54) **FILTERTROMMEL FÜR EINE VAKUUM- UND/ODER DRUCK-FILTRATIONSVORRICHTUNG**
FILTERING DRUM FOR A VACUUM AND/OR PRESSURE FILTRATION DEVICE
TAMBOUR FILTRANT POUR UN DISPOSITIF DE FILTRATION SOUS VIDE ET/OU SOUS PRESSION

(43) Veröffentlichungstag der Anmeldung: 11.12.2019
(73) Patentinhaber: ANDRITZ Separation GmbH, 85256 Vierkirchen (DE)
(72) Erfinder: KNOBLOCH, Wolfgang, 82327 Tutzing (DE); SCHERER, Dieter, 85276 Pfaffenhofen (DE)
(74) Vertreter: Viering, Jentschura & Partner mbB Patent- und Rechtsanwälte

(56) Entgegenhaltungen:
- CA-A1- 2 161 851
- CN-U- 206 103 473
- US-A- 3 494 473

## Beschreibung

Die Erfindung betrifft eine Filtertrommel für eine Vakuum- und/oder Druck-Filtrationsvorrichtung.

Aus der US 3 494 473 A ist ein Kunststoff-Trommelfilter mit einem Zylinder und Endplatten bekannt.

Aus der CA 2 161 851 A ist eine drehbare Filtertrommel zur Verwendung beim Waschen von Zellulosepulpe unter Druck bekannt.

Aus der CN 206 103 473 U ist eine Filtervorrichtung zum Filtern von Abwasser nach dem Waschen eines Stoffs bekannt.

Durch die Erfindung wird eine Filtertrommel für eine Vakuum- und/oder Druck-Filtrationsvorrichtung geschaffen, welche einen einfachen Aufbau hat und welche die Verwendung unterschiedlicher Materialkombinationen für diverse Bauteile der Filtertrommel und damit eine Verbundbauweise der Filtertrommel in nicht-komplexer Weise ermöglicht.

Hierzu stellt die Erfindung bereit eine Filtertrommel für eine Vakuum- und/oder Druck-Filtrationsvorrichtung zum Filtern einer Suspension, welche Feststoff und Flüssigkeit umfasst, aufweisend: eine Antriebswelle (z.B. Antriebs- und Lagerwelle), über welche die Filtertrommel drehlagerbar und drehantreibbar ist (und welche sich z.B. axial durch die Filtertrommel erstreckt), einen Filtertrommelkörper, der von der Antriebswelle separat ausgebildet ist(, durch welchen hindurch sich z.B. die Antriebswelle zentral (und axial) erstreckt) und der eine erste und eine zweite Trommelstirnwand sowie eine sich zwischen der ersten und der zweiten Trommelstirnwand (in Richtung) längs der Antriebswelle erstreckende Trommelmantelwand aufweist, über welche die erste und die zweite Trommelstirnwand miteinander verbunden sind, und einen ersten und einen zweiten Spannringverbund, von welchen jeweils zugeordnet die erste und die zweite Trommelstirnwand via radiales Klemmen mit der Antriebswelle fest verbunden sind, sodass ein auf die Antriebswelle aufgebrachtes Antriebsdrehmoment von der Antriebswelle über den ersten und/oder den zweiten Spannringverbund jeweils korrespondierend (bzw. jeweils zugeordnet) auf die erste und/oder die zweite Trommelstirnwand und damit auf den Filtertrommelkörper (kraftschlüssig, z.B. ausschließlich kraftschlüssig) übertragbar ist (z.B. übertragen wird).

Die Klemmbefestigung des Filtertrommelkörpers an der Antriebswelle erlaubt es in einfacher Weise, den Filtertrommelkörper aus einem anderen oder aus anderen Material/Materialien vorzusehen als die Antriebswelle, wobei mit der Klemmbefestigung dennoch eine sichere Drehmomentübertragung zwischen Filtertrommelkörper und Antriebswelle erzielbar ist.

Ein hierzu möglicher Spannringverbund weist z.B. auf einen radial inneren Wellen-Kontaktring und einen dazu radial äußeren Trommelstirnwand-Kontaktring, welche koaxial ineinander liegen, und einen ersten und einen diesem axial gegenüberliegenden zweiten Pressring, welche axial beidseitig zwischen den beiden Kontaktringen sowie zu diesen koaxial angeordnet sind und welche axial aufeinander zu bewegbar sind, wobei sie im Rahmen einer solchen Bewegung axial aufeinander zu die beiden Kontaktringe radial auseinander treiben, sodass der Wellen-Kontaktring rundum radial nach innen gegen die Antriebswelle gepresst wird und der Trommelstirnwand-Kontaktring rundum radial nach außen gegen die Trommelstirnwand (bzw. gegen eine innere Stirnwandung/Stirnlaibung eines in der Trommelstirnwand vorliegenden Durchgangslochs oder gegen einen zwischen dem Spannringverbund und der Trommelstirnwand angeordneten Anschlussring) gepresst wird. Die beiden Pressringe können z.B. über Schraubenverbindungen axial aufeinander zu bewegbar sein. Zum Beispiel ist hierzu in dem einen Pressring eine Anzahl von Gewindelöchern ausgebildet und im anderen Pressring ist eine entsprechende Anzahl von Durchgangslöchern, welche zu den Gewindelöchern fluchten, ausgebildet, und eine entsprechende Anzahl von Schrauben erstreckt sich axial durch die Durchgangslöcher hindurch und ist im Eingriff mit den Gewindelöchern, um dadurch die Pressringe axial aneinander ziehen zu können. Diese Ausgestaltung stellt allerdings nur eine mögliche Form eines Spannringverbunds dar, und der Fachmann wird auch andere Spannringverbund-Strukturen in Betracht ziehen, mit denen eine entsprechende Klemmbefestigung zwischen der Antriebswelle und der jeweiligen Trommelstirnwand erzielbar ist.

Die Antriebswelle kann einteilig ausgebildet sein und kann eine sich, wie oben als Beispiel erläutert, zentral durch die Filtertrommel hindurch erstreckende Antriebswelle sein. Wird in diesem Falle ein Antriebsdrehmoment z.B. nur an einem Ende der Antriebswelle auf diese eingebracht, dann wird das Antriebsmoment primär über jenen Spannringverbund auf die Filtertrommel übertragen, der diesem einen Ende nähergelegen ist, wobei dem anderen Spannringverbund, der von diesem einen Ende der Antriebswelle entfernter gelegen ist, dann eher nur die Übertragung bzw. Aufnahme von sonstigen Drehlagerkräften zukommt.

Die Antriebswelle kann auch ein erstes Antriebswellenelement und ein zweites Antriebswellenelement aufweisen, die (entlang der Antriebswelle axial getrennt bzw.) separat voneinander sind und zueinander fluchten, wobei die Antriebswelle über ihr erstes Antriebswellenelement mittels des ersten Spannringverbunds via radiales Klemmen mit der ersten Trommelstirnwand fest verbunden ist, und wobei die Antriebswelle über ihr zweites Antriebswellenelement mit der zweiten Trommelstirnwand via radiales Klemmen fest verbunden ist. Falls in diesem Falle das Antriebsdrehmoment nur auf eines von dem ersten und dem zweiten Antriebswellenelement der Antriebswelle aufgebracht wird, dann wird das Antriebsdrehmoment nur von diesem einen von dem ersten und dem zweiten Antriebswellenelement auf die Filtertrommel übertragen, wobei dem anderen von dem ersten und dem zweiten Antriebswellenelement nur die Übertragung bzw. die Aufnahme von sonstigen Drehlagerkräften zukommt.

Wie nachfolgend erläutert kann mit dem oben erläuterten Aufbau der Filtertrommel auch in einfacher Weise ein Verbundaufbau für den Filtertrommelkörper erzielt werden, was es erlaubt, den diversen Verbundbauteilen des Filtertrommelkörpers für deren Zweck (z.B. hinsichtlich Lastabtragung oder Filtrat-Abführung) unterschiedliche Funktionen und dementsprechend unterschiedliche Materialien zuzuordnen.

Die erste und die zweite Trommelstirnwand können zum Beispiel jeweils aufweisen eine lasttragende, innere Stütz-Ringplatte und eine äußere Verkleidungs-Ringplatte, welche von der Stütz-Ringplatte gestützt wird (bzw. gehalten wird), wobei der erste und der zweite Spannringverbund zwischen der Antriebswelle und der Stütz-Ringplatte der jeweils zugeordneten ersten und zweiten Trommelstirnwand angeordnet sind, so dass das Antriebsdrehmoment von der Antriebswelle über den ersten und/oder den zweiten Spannringverbund auf die jeweils zugeordnete Stütz-Ringplatte und damit auf den Filtertrommelkörper (bzw. auf die Filtertrommel) übertragen wird.

Zumindest eine der beiden Verkleidungs-Ringplatten kann zum Beispiel als Funktions-Ringplatte ausgebildet sein, in welcher Abführkanäle zum Abführen von beim Filtern entstehendem Filtrat ausgebildet sind (z.B. integral ausgebildet sind).

Die Trommelmantelwand weist zum Beispiel einen lasttragenden, inneren Stützmantel und einen äußeren Funktionsmantel auf, an welchem ein Filtermedium der Filtertrommel angeordnet ist und über welchen ein beim Filtern entstehendes Filtrat abgeführt wird und welcher von dem Stützmantel gestützt wird.

Zum Beispiel sind der Stützmantel und die Stütz-Ringplatten unter Ausbildung einer lasttragenden Innenstruktur starr miteinander verbunden, wobei diese lasttragende Innenstruktur von dem (bzw. mittels des) Funktionsmantel(s) und den(der) Verkleidungs-Ringplatten nach außen hin fluiddicht eingekapselt ist, um im Filterbetrieb gegen eine Kontaktberührung mit der die Filtertrommel umgebenden Suspension isoliert zu sein.

Die Verkleidungs-Ringplatten und der Funktionsmantel sind zum Beispiel aus einem anderen Material als die Stütz-Ringplatten und der Stützmantel.

Die Verkleidungs-Ringplatten und der Funktionsmantel sind zum Beispiel aus einem gleichen Material, und die Stütz-Ringplatten und der Stützmantel sind zum Beispiel aus einem gleichen Material.

Die Verkleidungs-Ringplatte und der Funktionsmantel sind zum Beispiel aus einem Kunststoffmaterial. Die Stütz-Ringplatten und der Stützmantel sind zum Beispiel aus einem schweißbaren Metallmaterial und sind unter Ausbildung der lasttragenden Innenstruktur starr miteinander verschweißt.

Zum Beispiel wird von der Stütz-Ringplatte sowie der Verkleidungs-Ringplatte der ersten Trommelstirnwand ein erstes zentrales Durchgangsloch definiert und wird von der Stütz-Ringplatte sowie der Verkleidungs-Ringplatte der zweiten Trommelstirnwand ein zweites zentrales Durchgangsloch definiert, wobei das erste und das zweite Durchgangsloch jeweils zu der Antriebswelle koaxial sind und von der Antriebswelle durchdrungen werden, und wobei zwischen der Antriebswelle und der Verkleidungs-Ringplatte sowohl der ersten als auch der zweiten Trommelstirnwand eine Dichtungseinrichtung angeordnet ist, mittels deren die jeweilige Verkleidungs-Ringplatte der ersten und der zweiten Trommelstirnwand gegen die Antriebswelle fluidabgedichtet ist, sodass die Stütz-Ringplatten im Filterbetrieb an jeweiligen trommelstirnseitigen Eintrittsstellen der Antriebswelle in die Filtertrommel (bzw. in den Filtertrommelkörper) gegen eine Kontaktberührung mit der die Filtertrommel umgebenden Suspension isoliert sind.

Die jeweilige Dichtungseinrichtung wird zum Beispiel von einem Dichtring gebildet, wobei der Dichtring optional eine starre Ringkomponente und einen radial inneren und einen radial äußeren, elastischen O-Ring aufweist, welche O-Ringe elastisch vorgespannt gegen die Antriebswelle und die zugeordnete Verkleidungs-Ringplatte anliegen, um dadurch eine fluiddichte Abdichtung zwischen der jeweiligen Verkleidungs-Ringplatte und der Antriebswelle zu erstellen/zu erzielen.

Die Antriebswelle ist zum Beispiel zumindest im Bereich jeweiliger trommelstirnseitiger Eintrittsstellen der Antriebswelle in die Filtertrommel mit einer Kunststoffbeschichtung beschichtet, wobei die Antriebswelle zum Beispiel an allen Stellen, die aus der Filtertrommel herausragen, oder ggf. auch im Wesentlichen komplett beschichtet ist. An jenen Bereichen, an welchen der erste und der zweite Spannringverbund an der Antriebswelle angeordnet sind bzw. angreifen, ist die Antriebswelle z.B. nicht beschichtet.

Die jeweilige Verkleidungs-Ringplatte ist zum Beispiel aus einem Kunststoff-Plattenmaterial gebildet oder ist mit einer Beschichtung aus Kunststoff-Plattenbeschichtungsmaterial versehen, und die jeweilige Dichtungseinrichtung wird zum Beispiel von einem Dichtungsring gebildet, der aus einem Kunststoff-Ringmaterial hergestellt ist oder der mit einer Beschichtung aus einem Kunststoff-Ringbeschichtungsmaterial versehen ist. Bei der jeweiligen Dichtungseinrichtung ist zum Beispiel das Kunststoff-Ringmaterial oder das Kunststoff-Ringbeschichtungsmaterial mit der Kunststoffbeschichtung der Antriebswelle und mit dem Kunststoff-Plattenmaterial oder dem Kunststoff-Plattenbeschichtungsmaterial verschweißt unter Ausbildung einer nicht-lasttragenden Fluidabdichtung zwischen dem jeweiligen Dichtungsring und der Antriebswelle und der jeweiligen Verkleidungs-Ringplatte.

Die vorausgehend beschriebenen diversen Strukturen erlauben es, als Kunststoffmaterialen für die diversen Bauteile und/oder Beschichtungen jeweils ein Kunststoffmaterial heranzuziehen, welches im Hinblick auf die außen vorliegende Suspension unempfindlich ist, wobei auf Festigkeit des jeweiligen Kunststoffmaterials nicht zu achten ist, da die tragendenden und drehmomentaufnehmenden Bauteile von den innen liegenden Stützbauteilen (zum Beispiel den Stütz-Ringplatten und dem Stützmantel bzw. der lasttragenden Innenstruktur) aufgenommen werden. Indem diese innen liegenden Stützbauteile und die Antriebswelle ihrerseits nach außen hin einfach abkapselbar bzw. abgekapselt sind von den außen liegenden Beschichtungen und Verkleidungs-Ringplatten und dem Funktionsmantel, können die lasttragenden Stützbauteile aus einem der tragenden Funktion zugeordneten Material hergestellt werden, wobei nicht auf Unempfindlichkeit dieses Materials hinsichtlich einer Berührung mit der Suspension geachtet werden muss.

Die Erfindung stellt ferner eine Vakuum- und/oder Druck-Filtrationsvorrichtung zum Filtern einer Suspension, welche Feststoff und Flüssigkeit umfasst, bereit mit einer wie hierin beschriebenen Filtertrommel, welche mittels deren Antriebwelle um eine von der Antriebswelle definierte Wellenachse drehgelagert ist, und einem Antriebsmotor, der mit der Antriebswelle verbunden ist, wobei ein von dem Antriebsmotor auf die Antriebswelle aufgebrachtes Antriebsdrehmoment über den ersten und/oder den zweiten Spannringverbund auf den Filtertrommelkörper (bzw. auf die Filtertrommel) übertragen wird.

Die Erfindung wird nachfolgend anhand diverser Ausführungsformen mit Bezug auf die Zeichnung erläutert. In der Zeichnung zeigen:

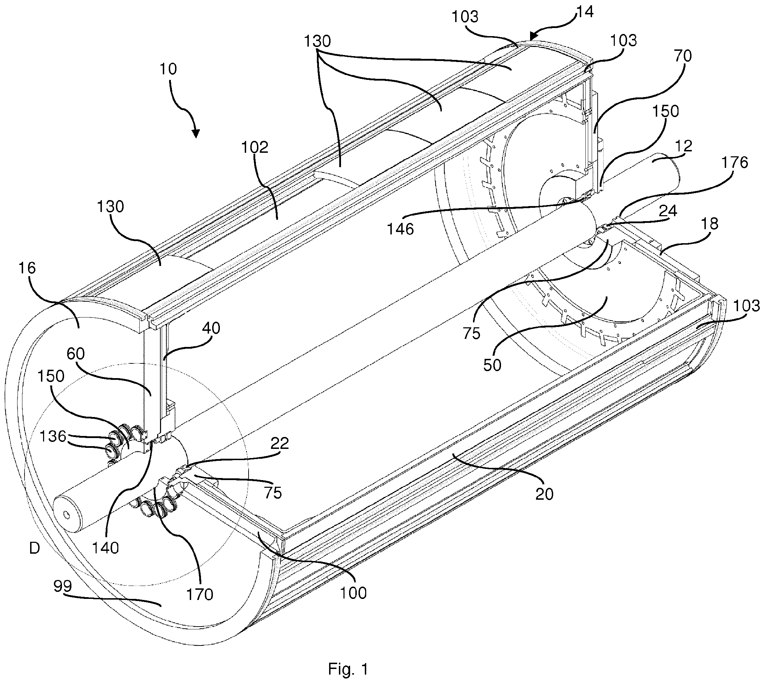

Fig. 1 eine schematische Ansicht einer Druck- und/oder Vakuum-Filtrationsvorrichtung mit einer aufgeschnittenen perspektivisch gezeigten Filtertrommel,
Fig. 2 eine Teillängsschnittansicht der Filtertrommel von Fig. 1,

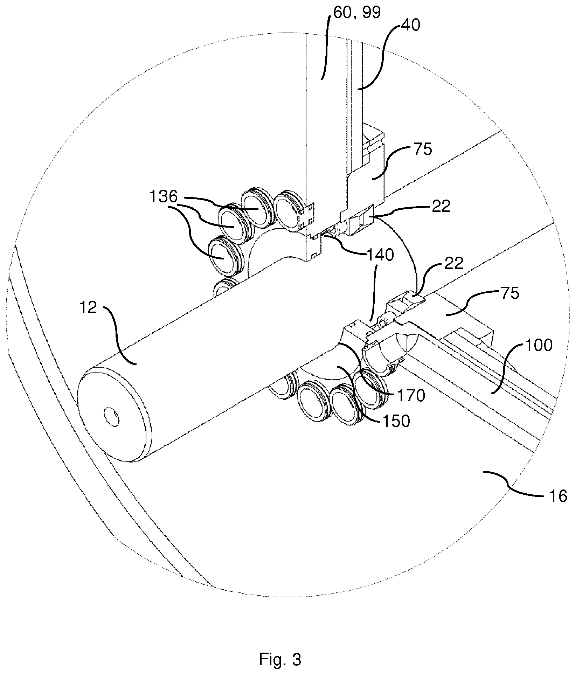

Fig. 3 eine Detailansicht des Details D der Filtertrommel von Fig. 1,
Fig. 4 eine Detailansicht des Details B der Filtertrommel von Fig. 2,

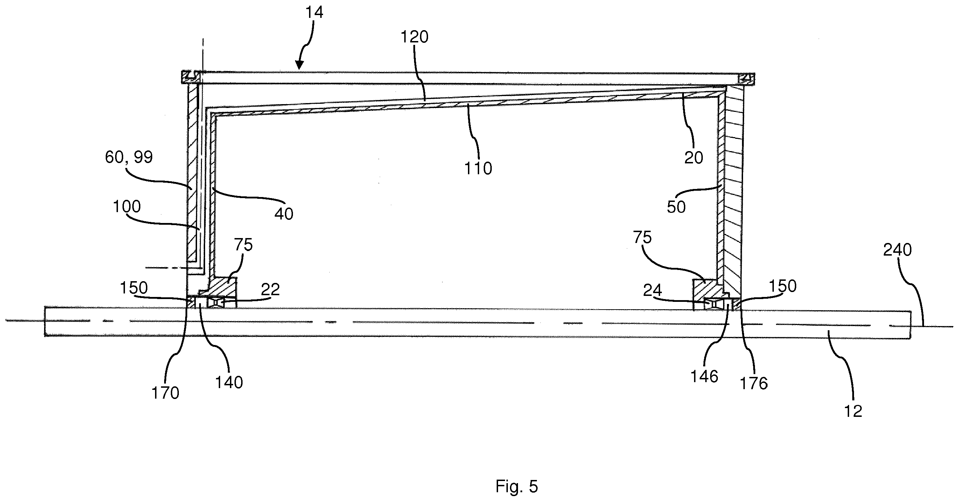

Fig. 5 eine schematische Teillängsschnittansicht der Filtertrommel von Fig. 1,
Figuren 6-10 schematische Teillängsschnittansichten der Filtertrommel gemäß Ausführungsformen und
Fig. 11 eine schematische Teillängsschnittansicht der Filtertrommel gemäß einer weiteren Ausführungsform.

Wie aus den Figuren ersichtlich ist, weist eine Filtertrommel 10 für eine Vakuum- und/oder Druck-Filtrationsvorrichtung zum Filtern einer Suspension S, welche Feststoff und Flüssigkeit umfasst, auf: eine Antriebswelle 12, welche sich durch die Filtertrommel 10 erstreckt und über welche die Filtertrommel 10 drehlagerbar und drehantreibbar ist, einen Filtertrommelkörper 14, der von der Antriebswelle 12 separat ausgebildet ist, durch welchen hindurch sich die Antriebswelle 12 zentral erstreckt, und der eine erste 16 und eine zweite 18 Trommelstirnwand sowie eine sich zwischen der ersten 16 und der zweiten 18 Trommelstirnwand längs der Antriebswelle 12 erstreckende Trommelmantelwand 20 aufweist, über welche die erste 16 und die zweite 18 Trommelstirnwand miteinander verbunden sind, und einen ersten 22 und einen zweiten 24 Spannringverbund, von welchen jeweils zugeordnet die erste 16 und die zweite 18 Trommelstirnwand via radiales Klemmen mit der Antriebswelle 12 fest verbunden sind, sodass ein auf die Antriebswelle 12 aufgebrachtes Antriebsdrehmoment von der Antriebswelle 12 über den ersten 22 und den zweiten 24 Spannringverbund auf die erste 16 und die zweite 18 Trommelstirnwand und damit auf den Filtertrommelkörper 14 übertragen wird. Im Falle dass das Antriebsdrehmoment nur an einem Ende der Antriebswelle 12 auf diese aufgebracht wird, wird das Antriebsdrehmoment primär von jenem von dem ersten und dem zweiten Spannringverbund 22, 24 auf den Filtertrommelkörper 14 übertragen, welcher diesem Ende nähergelegen ist, wobei dem anderen von dem ersten und dem zweiten Spannringverbund 22, 24, z.B. auch in Abhängigkeit von der Länge der Antriebswelle 12, dann eher nur die Übertragung bzw. die Aufnahme von Drehlagerkräften zukommt.

In den in den Figuren gezeigten Ausführungsbeispielen weisen die erste 16 und die zweite 18 Trommelstirnwand der Filtertrommel 10 z.B. jeweils eine lasttragende, innere Stütz-Ringplatte 40, 50 und eine äußere Verkleidungs-Ringplatte 60, 70 auf, welche von der jeweiligen Stütz-Ringplatte 40, 50 gestützt werden. Der erste 22 und der zweite 24 Spannringverbund sind zwischen der Antriebswelle 12 und der Stütz-Ringplatte 40, 50 der jeweils zugeordneten ersten 16 und zweiten 18 Trommelstirnwand angeordnet, sodass das Antriebsdrehmoment von der Antriebswelle 12 über den ersten 22 und den zweiten 24 Spannringverbund auf die jeweils zugeordnete Stütz-Ringplatte 40, 50 und damit auf den Filtertrommelkörper 14 bzw. auf die Filtertrommel 10 übertragen wird.

Im in den Figuren gezeigten Ausführungsbeispiel weisen die erste Trommelstirnwand 16 und die zweite Trommelstirnwand 18 (bzw. deren innere Stütz-Ringplatten 40, 50) jeweils an ihrem der Antriebswelle 12 zugewandten Innenumfang einen jeweiligen Anschlussring 75 auf, welcher sich rings der Antriebswelle 12 erstreckt und an welchem jeweils zugeordnet der erste und der zweite Spannringverbund 22, 24 angreifen, sodass das Drehmoment über den jeweiligen Anschlussring 75 auf die erste und die zweite Trommelstirnwand 16, 18 (bzw. auf deren Stütz-Ringplatte 40, 50) und damit auf den Filtertrommelkörper 14 übertragen wird.

In den Figuren ist ein möglicher Spannringverbund 22, 24 gezeigt. Der gezeigte Spannringverband 22, 24 weist auf einen radial inneren Wellen-Kontaktring 80 und einen dazu radial äußeren Trommelstirnwand-Kontaktring 84, welche koaxial ineinander liegen, und einen ersten 88 und einen diesem axial gegenüberliegenden zweiten 92 Pressring, welche axial beidseitig (radial) zwischen den beiden Kontaktringen 80, 84 sowie zu diesen koaxial angeordnet sind und welche axial aufeinander zu bewegbar sind.

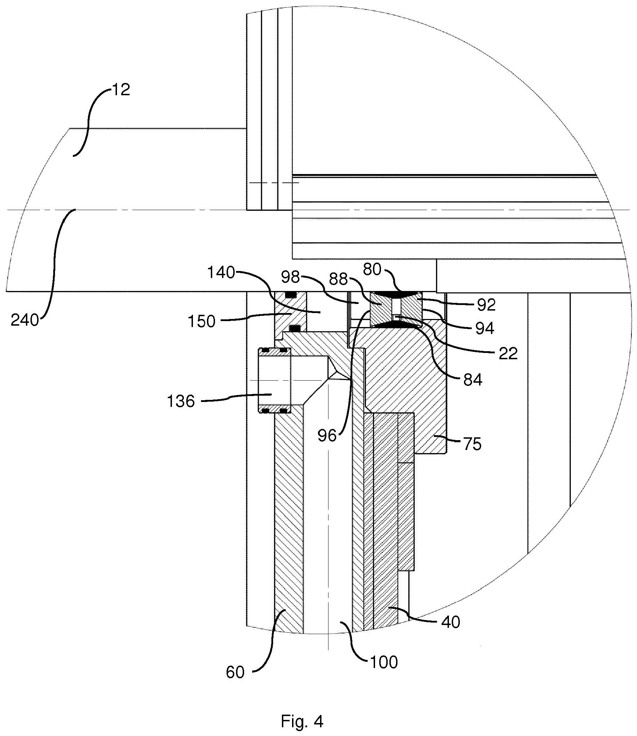

Der erste und der zweite Pressring 88, 92 sind im Querschnitt axial aufeinander zu konisch verjüngt ausgebildet (siehe z.B. Fig. 4), und der Wellen-Kontaktring 80 und der Trommelstirnwand-Kontaktring 84 bilden im Querschnitt zwei zu den Querschnitten der Pressringe 88, 92 komplementäre, axial voneinander weg sich konisch erweiternde Aufnahmen, in welchen die Pressringe 88, 92 aufgenommen sind.

Wenn bei dieser Konfiguration die Pressringe 88, 92 axial aufeinander zu bewegt werden, dann treiben die beiden Pressringe 88, 92 die beiden Kontaktringe 80, 84 radial auseinander, sodass der Wellen-Kontaktring 80 rundum radial nach innen gegen die Antriebswelle 12 gepresst wird und der Trommelstirnwand-Kontaktring 84 rundum radial nach außen gegen die innere Trommelstirnwand 16, 18 bzw. deren Anschlussring 75 gepresst wird.

Zum axialen Bewegen der beiden Pressringe 88, 92 ist z.B. in dem einen Pressring 92 eine Anzahl von Gewindelöchern 94 ausgebildet und ist z.B. in dem anderen Pressring 88 eine entsprechende Anzahl von Durchgangslöchern 96, welche zu den Gewindelöchern 94 fluchten, ausgebildet, und erstreckt sich z.B. eine entsprechende Anzahl von Schrauben 98 axial durch die Durchgangslöcher 96 hindurch und ist im Eingriff mit den Gewindelöchern 94, wodurch die Pressringe 88, 92 axial aufeinander gezogen werden können.

Die Erfindung ist jedoch auf diese spezielle Struktur für einen Spannringverbund nicht beschränkt, sondern es können auch andere in der Technik bekannte Spannringverbunde herangezogen werden, sofern dadurch eine lasttragende bzw. drehmomentübertragende (kraftschlüssige) Verbindung zwischen der Antriebswelle 12 und der jeweiligen Trommelstirnwand 16, 18 via Klemmen (z.B. ausschließlich via Klemmen) erreicht werden kann. So kann ein möglicher Spannringverbund (nicht gezeigt) z.B. auch aufweisen einen radial inneren Wellen-Kontaktring und einen dazu radial äußeren Trommelstirnwand-Kontaktring, welche koaxial ineinander liegen. Eine radial äußere Umfangsfläche des Trommelstirnwand-Kontaktrings und eine radial innere Umfangsfläche des Wellen-Kontaktrings sind jeweils im Wesentlichen zylinderförmig und korrespondieren zu der Trommelstirnwand 16, 18 bzw. hier zu dem jeweiligen Anschlussring 75 bzw. zu der Antriebswelle 12. Eine radial innere Fläche des Trommelstirnwand-Kontaktrings und eine radial äußere Fläche des Wellen-Kontaktrings sind jeweils zueinander komplementär konisch ausgestaltet und liegen aneinander an. Im Rahmen einer Bewegung dieser beiden Kontaktringe axial aufeinander zu, wird der Wellen-Kontaktring rundum radial nach innen gegen die Antriebswelle 12 gepresst und wird der Trommelstirnwand-Kontaktring rundum radial nach außen gegen die Trommelstirnwand 16, 18 bzw. hier gegen den jeweiligen Anschlussring 75 gepresst. Zum axialen Bewegen dieser beiden Kontaktringe ist z.B. in dem einen Kontaktring eine Anzahl von Gewindelöchern ausgebildet und ist in dem anderen Kontaktring eine entsprechende Anzahl von Durchgangslöchern, welche zu den Gewindelöchern fluchten, ausgebildet, und eine entsprechende Anzahl von Schrauben erstreckt sich axial durch die Durchgangslöcher hindurch und ist im Eingriff mit den Gewindelöchern, um dadurch die Kontaktringe axial aneinander ziehen zu können.

In den in den Figuren gezeigten Ausführungsbeispielen ist z.B. die eine 60 der beiden Verkleidungs-Ringplatten 60, 70 als Funktions-Ringplatte 99 ausgebildet, in welcher Abführkanäle 100 zum Abführen von beim Filtern entstehendem Filtrat ausgebildet sind. Die Abführkanäle 100 korrespondieren zu jeweiligen Filterzellen 102, die von der Trommelmantelwand 20 und Trennleisten 103, die sich zwischen der ersten 16 und der zweiten 18 Trommelstirnwand entlang der Filtertrommel 10 erstrecken, definiert sind. Es können auch beide Verkleidungs-Ringplatten 60, 70 als solche wie hierin beschriebenen Funktions-Ringplatten ausgebildet sein.

In den in den Figuren gezeigten Ausführungsbeispielen weist die Trommelmantelwand 20 z.B. auf einen lasttragenden, inneren Stützmantel 110 und einen äußeren Funktionsmantel 120, an welchem ein Filtermedium 130 der Filtertrommel 10 angeordnet ist und über welchen ein beim Filtern entstehendes Filtrat abgeführt wird und welcher von dem Stützmantel 110 gestützt wird. Das Filtermedium 130 kann von den Trennleisten 103 gehalten sein, wobei jeder Filterzelle 102 ein jeweiliges Filtermedium 130 zugeordnet sein kann; d.h. das Filtermedium 130 kann von einer der Anzahl der Filterzellen 102 entsprechenden Mehrzahl von voneinander separaten Filtermedien 130 gebildet sein.

Der äußere Funktionsmantel 120 kann beispielsweise aus einem Kunststoffmaterial oder aus einem metallischen oder keramischen Material gebildet sein, das jeweilig so ausgewählt ist, dass es gegen eine Berührung/einen Kontakt mit der Suspension und/oder dem Filtrat unempfindlich, z.B. (korrosions-)beständig, ist. Ferner oder alternativ kann der äußere Funktionsmantel 120 auch mit einem solchen Kunststoffmaterial oder einem solchen metallischen oder keramischen Material beschichtet sein.

Bei den in den Figuren gezeigten Ausführungsbeispielen sind z.B. der Stützmantel 110 und die Stütz-Ringplatten 40, 50 unter Ausbildung einer lasttragenden Innenstruktur starr miteinander verbunden, wobei diese lasttragende Innenstruktur von dem Funktionsmantel 120 und den Verkleidungs-Ringplatten 60, 70 nach außen hin fluiddicht eingekapselt ist, um im Filterbetrieb gegen eine Kontaktberührung mit der die Filtertrommel 10 umgebenden Suspension S isoliert zu sein.

Die Verkleidungs-Ringplatten 60, 70 können beispielsweise aus einem Kunststoffmaterial oder aus einem metallischen oder keramischen Material gebildet sein, welches jeweilig so ausgewählt ist, dass es hinsichtlich einer Kontaktberührung mit der Suspension und/oder dem Filtrat unempfindlich bzw.

(korrosions-)beständig ist. Ferner können die Verkleidungs-Ringplatten 60, 70 mit einem derartigen Kunststoffmaterial oder einem derartigen metallischen oder keramischen Material beschichtet sein.

Der Funktionsmantel 120 sowie auch z.B. die Verkleidungs-Ringplatten 60, 70 sind zum Beispiel jeweils aus einem Kunststoffmaterial gebildet oder mit einem Kunststoffmaterial beschichtet, welches Kunststoffmaterial bzw. welche Kunststoffmaterialien miteinander verschweißbar ist/sind. Hierbei sind der Funktionsmantel 120 und die Verkleidungs-Ringplatten 60, 70 über ihr Kunststoffmaterial unter Ausbildung einer fluiddichten Einkapselung miteinander verschweißt, wobei die (jeweilige) (Kunststoff-)Schweißverbindung(en) zwischen dem Funktionsmantel 120 und den Verkleidungs-Ringplatten 60, 70 nicht lasttragend ist/sind. Die Stütz-Ringplatten 40, 50 und der Stützmantel 110 sind zum Beispiel jeweils aus einem Metallmaterial und sind unter Ausbildung einer (jeweiligen) lasttragenden Schweißverbindung miteinander verschweißt.

Rings der Antriebswelle 12 sind in der einen Trommelstirnwand 16 bzw. in deren als Funktions-Ringplatte 99 ausgebildeten Verkleidungs-Ringplatte 60 eine Anzahl/Mehrzahl von Abführkanal-Anschlussöffnungen 136 ausgebildet (z.B. integral ausgebildet), welche einem jeweiligen Filtrat-Abführkanal 100 zugeordnet sind und welche im Filterbetrieb mit einem nicht dargestellten Steuerkopf verbunden sind, über welchen dem jeweiligen Abführkanal 100 und damit der mit diesem fluidverbundenen Filterzelle 102 in gesteuerter Weise in Abhängigkeit von der Drehung der Filtertrommel 10 ein Vakuum und/oder ein Luftdruck zuführbar ist.

Von der Stütz-Ringplatte 40 sowie der Verkleidungs-Ringplatte 60 der ersten Trommelstirnwand 16 wird ein erstes zentrales Durchgangsloch 140 definiert, und von der Stütz-Ringplatte 50 sowie der Verkleidungs-Ringplatte 70 der zweiten Trommelstirnwand 18 wird ein zweites zentrales Durchgangsloch 146 definiert. Das erste 140 und das zweite 146 Durchgangsloch sind jeweils zu der Antriebswelle 12 koaxial und werden von der Antriebswelle 12 durchdrungen.

Zwischen der Antriebswelle 12 sowie der jeweiligen Verkleidungs-Ringplatte 60, 70 der ersten 16 und der zweiten 18 Trommelstirnwand ist jeweils eine Dichtungseinrichtung 150 angeordnet, mittels deren die jeweilige Verkleidungs-Ringplatte 60, 70 der ersten 16 und der zweiten 18 Trommelstirnwand gegen die Antriebswelle 12 fluidabgedichtet ist, sodass die Stütz-Ringplatten 40, 50 im Filterbetrieb an jeweiligen trommelstirnseitigen Eintrittsstellen 170, 176 der Antriebswelle 12 in die Filtertrommel 10 gegen eine Kontaktberührung mit der die Filtertrommel 10 umgebenden Suspension S isoliert sind.

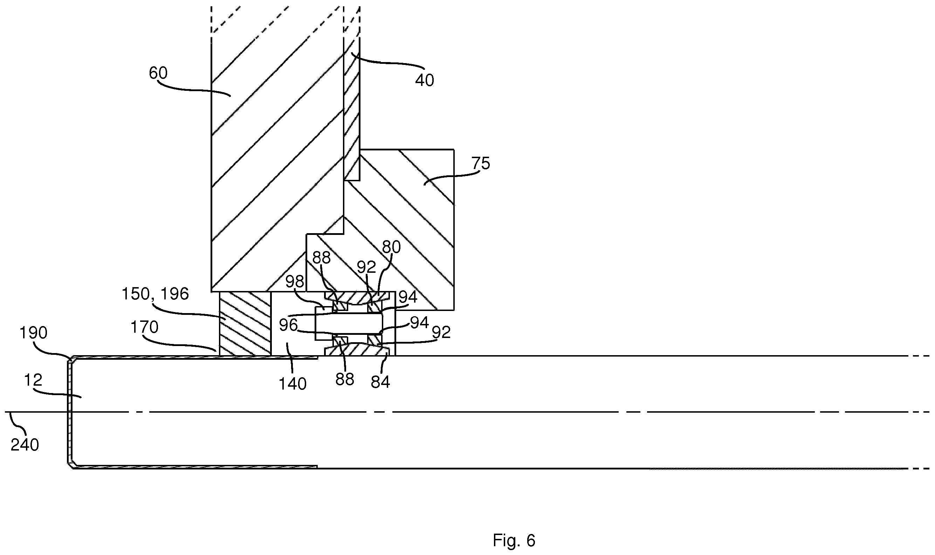

Wie in den Figuren 6 bis 10 gezeigt ist, kann die Antriebswelle 12 zumindest im Bereich jeweiliger trommelstirnseitiger Eintrittsstellen 170, 176 der Antriebswelle 12 in die Filtertrommel 10 und/oder auch im gesamten Bereich, der sich außerhalb der Filtertrommel 10 befindet, mit einer Kunststoffbeschichtung 190 beschichtet sein. Die Kunststoffbeschichtung 190 kann aus einem Kunststoffmaterial gebildet sein, welches verschweißbar, zum Beispiel verschweißbar mit dem Kunststoffmaterial der Verkleidungs-Ringplatten 60, 70, ist. Im Falle einer solchen Kunststoffbeschichtung 190 erfolgt die Abdichtung mittels der Dichtungseinrichtung 150 z.B. zwischen der jeweiligen Verkleidungs-Ringplatte 60, 70 der ersten 16 und der zweiten 18 Trommelstirnwand und der Kunststoffbeschichtung 190 der Antriebswelle 12.

Im Folgenden werden verschiedene Ausführungsformen der Dichtungseinrichtung 150 beschrieben. Wie in Figur 6 gezeigt ist, kann die Dichtungseinrichtung 150 aus einem Dichtungskörper 196 gebildet sein, welcher beispielsweise ein Klebeelement ist.

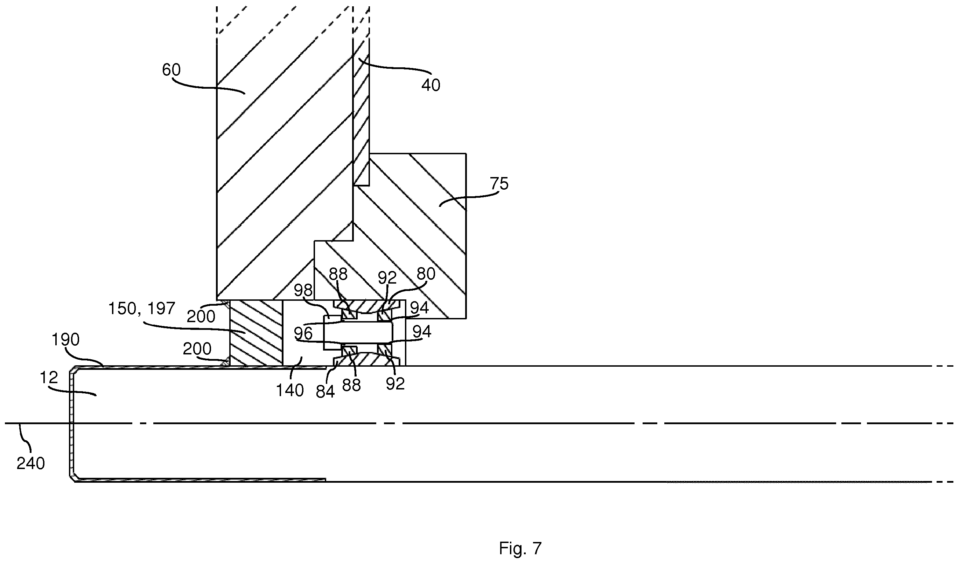

Wie in Figur 7 dargestellt ist, kann die Dichtungseinrichtung 150 gebildet sein aus einem Dichtungsring 197, der aus einem Kunststoff-Ringmaterial hergestellt ist oder der mit einer Beschichtung aus einem Kunststoff-Ringbeschichtungsmaterial versehen ist, und der mittels vernetzender Abdichtung 200, welche beispielsweise eine Dichtklebung oder eine Dichtschweißung sein kann, abgedichtet ist zwischen der Verkleidungs-Ringplatte 60, 70 und der Antriebswelle 12 bzw. der Kunststoffbeschichtung 190 der Antriebswelle 12. In Folge der vernetzenden Abdichtung 200 ist eine nicht-lasttragende Fluidabdichtung zwischen dem jeweiligen Dichtungsring 197 und der Antriebswelle 12 bzw. der Beschichtung 190 der Antriebswelle 12 und der jeweiligen Verkleidungs-Ringplatte 60, 70 hergestellt. Infolgedessen ist ebenso eine Fluidabdichtung zwischen der Antriebswelle 12 bzw. der Beschichtung 190 der Antriebswelle 12 und der jeweiligen Verkleidungs-Ringplatte 60, 70 hergestellt.

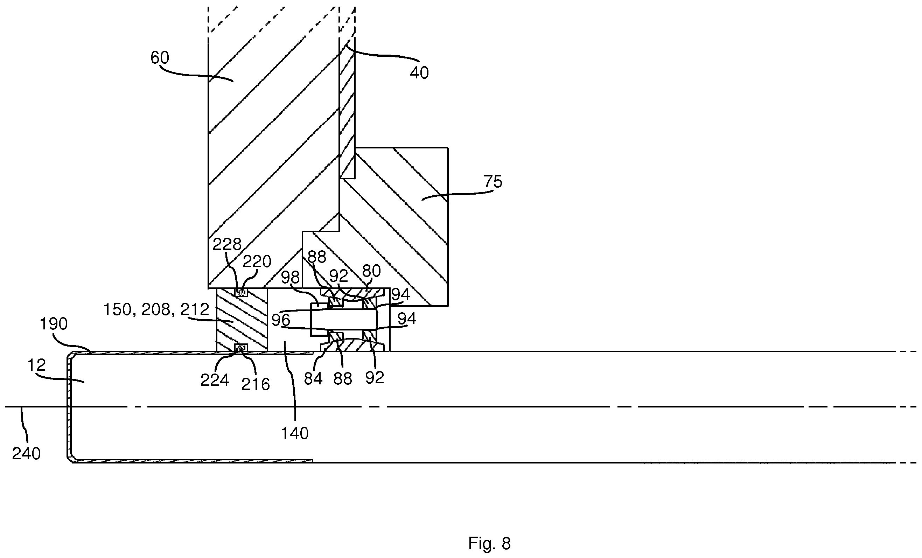

Wie in Figur 8 dargestellt ist, kann die jeweilige Dichtungseinrichtung 150 von einem Dichtring 208 gebildet sein, wobei der Dichtring optional eine starre Ringkomponente 212 und einen radial inneren 216 und einen radial äußeren 220, elastischen O-Ring aufweist, wobei der radial innere 216 und der radial äußere 220 O-Ring angeordnet sind in einer radial inneren Nut 224 bzw. einer radial äußeren Nut 228, welche jeweils in tangentialer Richtung entlang einer radial inneren Umfangsfläche bzw. einer radial äußeren Umfangsfläche der Ringkomponente 212 gebildet sind. Die O-Ringe 216, 220 sind elastisch vorgespannt und liegen gegen die Antriebswelle 12 bzw. die Beschichtung 190 der Antriebswelle 12 und die jeweilige Verkleidungs-Ringplatte 60, 70 an.

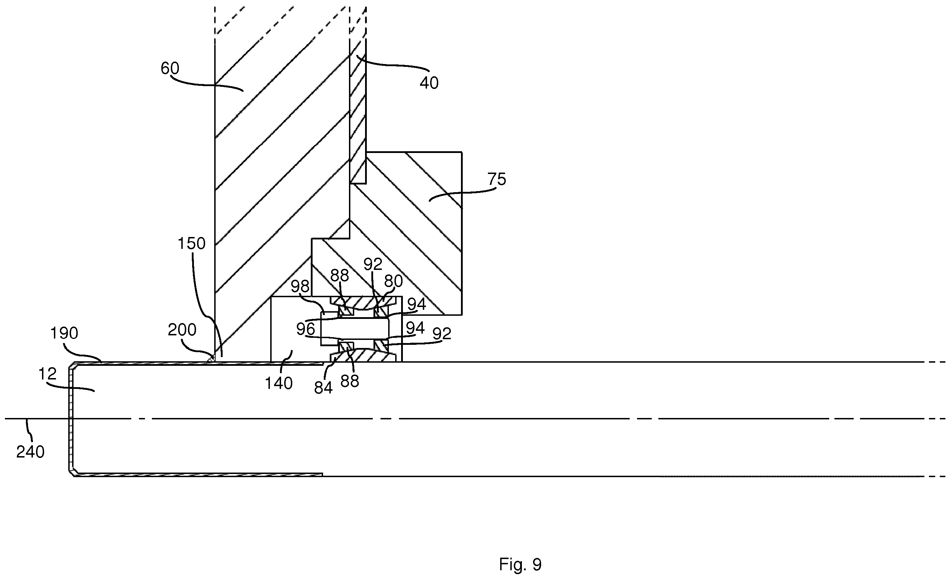

Wie in Figur 9 dargestellt ist, kann die Dichtungseinrichtung 150 gebildet sein, indem die Verkleidungs-Ringplatte 60, 70 an die Antriebswelle 12 bzw. an die Beschichtung 190 der Antriebswelle 12 angrenzt und mittels vernetzender Abdichtung 200, welche beispielsweise eine Dichtklebung oder eine Dichtschweißung sein kann, zu der Antriebswelle 12 bzw. zu der Beschichtung 190 der Antriebswelle 12 hin abgedichtet ist.

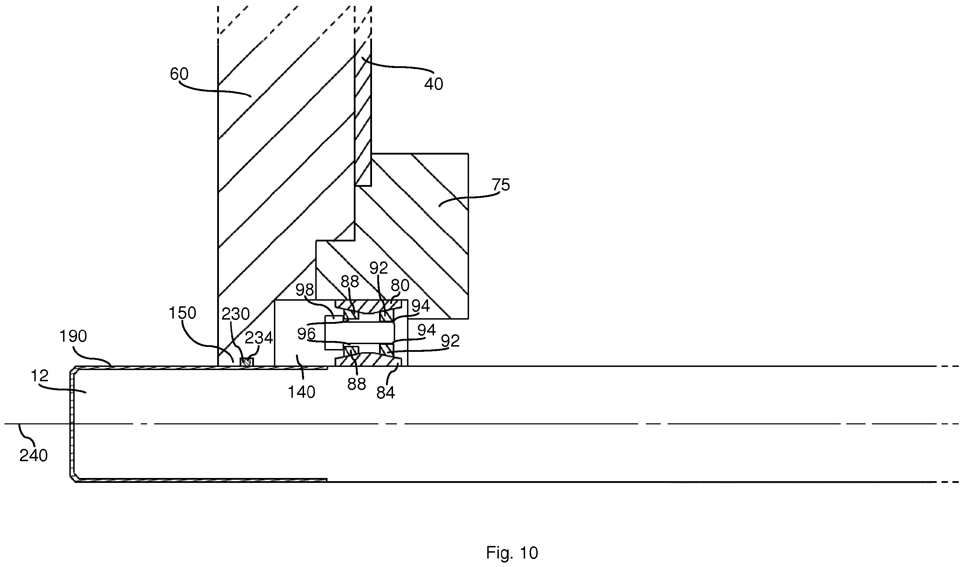

Wie in Figur 10 dargestellt ist, kann die Dichtungseinrichtung 150 gebildet sein, indem die Verkleidungs-Ringplatte 60, 70 an die Antriebswelle 12 bzw. an die Beschichtung 190 der Antriebswelle 12 angrenzt und in einer Nut 230, welche tangential entlang einer äußeren Umfangsfläche der Verkleidungs-Ringplatte 60, 70 gebildet ist, ein elastischer O-Ring 234 angeordnet ist, welcher elastisch vorgespannt ist und eine Abdichtung zu der Antriebswelle 12 bzw. zu der Beschichtung 190 der Antriebswelle 12 herstellt.

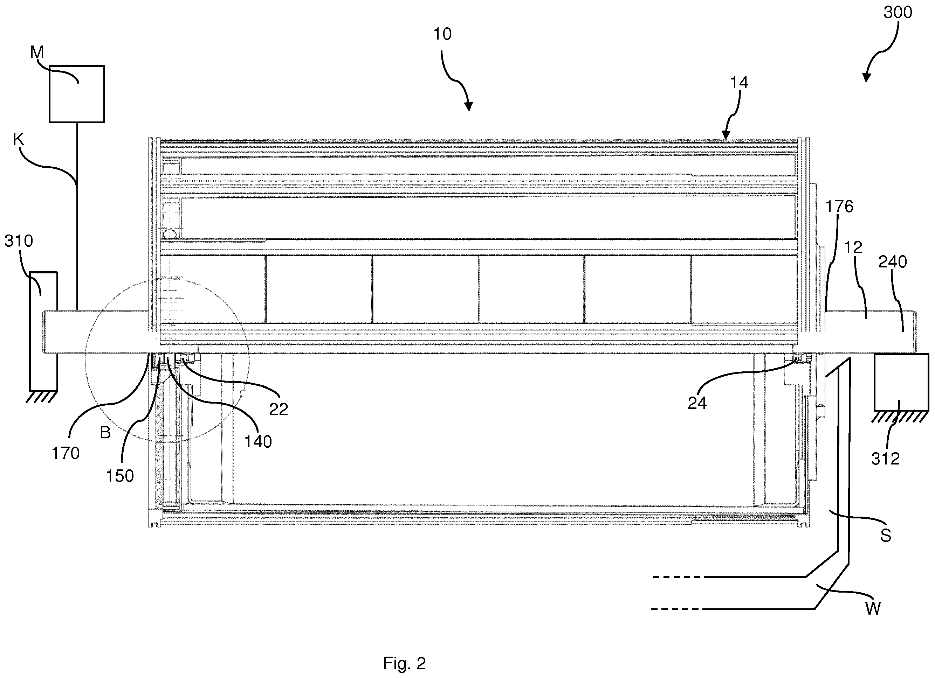

Mit Bezug auf Fig. 2 weist eine Vakuum- und/oder Druck-Filtrationsvorrichtung 300 zum Filtern einer Suspension, welche Feststoff und Flüssigkeit umfasst, gemäß einem Ausführungsbeispiel z.B. auf: eine zuvor beschriebene Filtertrommel 10, welche mittels deren Antriebwelle 12 um eine von der Antriebswelle 12 definierte Wellenachse 240 drehgelagert ist, und einen Antriebsmotor M, der mit der Antriebswelle 12 verbunden ist, wobei ein von dem Antriebsmotor M auf die Antriebswelle 12 aufgebrachtes Antriebsdrehmoment über den ersten 22 und den zweiten 24 Spannringverbund auf den Filtertrommelkörper 14 übertragen wird (hier primär über den ersten Spannringverbund 22). Die Antriebswelle 12 kann mittels eines ersten 310 und eines zweiten 312 Lagers gelagert sein. Das aufgebrachte Drehmoment kann beispielsweise mittels einer mechanischen Kopplung K, z.B. mittels Zahnrädern, einer Kette und/oder eines Riemens, von dem Antriebsmotor M auf die Antriebswelle 12 übertragen werden.

Die Filtertrommel 10 kann beispielsweise derart angeordnet sein, dass sie innerhalb einer Wanne W rotiert, in welcher sich die zu filternde Suspension S befindet.

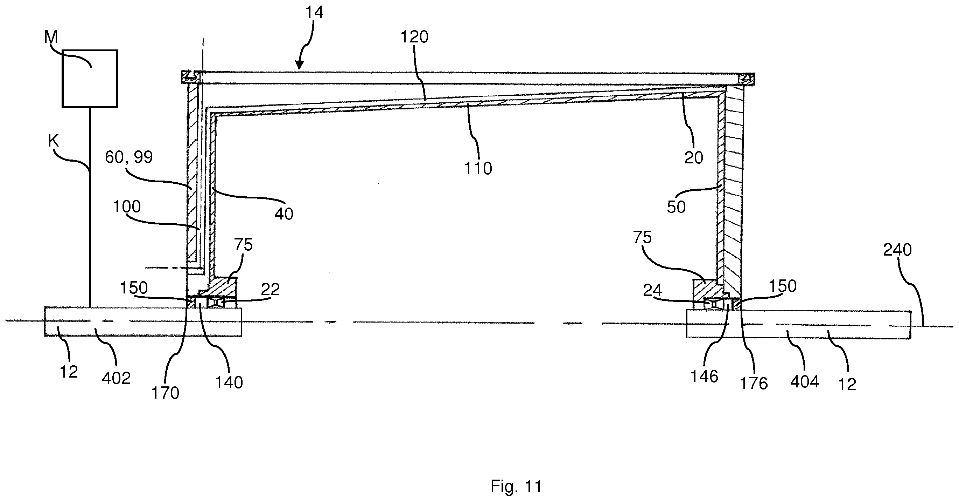

Im Folgenden wird eine Filtertrommel 10 gemäß einer weiteren Ausführungsform basierend auf Fig. 11 beschrieben. Die Ausführungsform von Fig. 11 weist im Wesentlichen alle Merkmale der zuvor beschriebenen Ausführungsformen auf, sodass im Folgenden nur die Unterschiede zwischen diesen Ausführungsformen beschrieben werden.

Gemäß der Ausführungsform von Fig. 11 weist die Antriebswelle 12 der Filtertrommel 10 ein erstes Antriebswellenelement 402 und ein zweites Antriebswellenelement 404 auf, die entlang der Antriebswelle 12 axial voneinander getrennt sind und zueinander fluchten, wobei die Antriebswelle 12 über ihr erstes Antriebswellenelement 402 mittels des ersten Spannringverbunds 22 via radiales Klemmen mit der ersten Trommelstirnwand 16 fest verbunden ist, und wobei die Antriebswelle 12 über ihr zweites Antriebswellenelement 404 mittels des zweiten Spannringverbundes 24 mit der zweiten Trommelstirnwand 18 via radiales Klemmen fest verbunden ist. Wie in Fig. 11 exemplarisch dargestellt ist, wird das aufgebrachte Drehmoment mittels der mechanischen Kopplung K von dem Antriebsmotor M auf das erste Antriebswellenelement 402 der Antriebswelle 12 übertragen, sodass das Antriebsdrehmoment nur von diesem ersten Antriebswellenelement 402 auf die Filtertrommel 10 übertragen wird, wobei dem zweiten Antriebswellenelement 404 in diesem Falle nur die Übertragung bzw. die Aufnahme von sonstigen Drehlagerkräften zukommt.

Obwohl die Erfindung anhand vor Ausführungsformen beschrieben wurde, ist die Erfindung nicht auf exakt diese Ausführungsformen beschränkt. Der Fachmann wird stattdessen auch Alternativen und Modifikationen als von der Erfindung umfasst ansehen, sofern innerhalb des durch die Ansprüche definierten Schutzumfangs liegend.

### Bezugzeichenliste

- K: mechanische Kopplung
- M: Antriebsmotor
- S: Suspension
- W: Wanne
- 10: Filtertrommel
- 12: Antriebswelle
- 14: Filtertrommelkörper
- 16: erste Trommelstirnwand
- 18: zweite Trommelstirnwand
- 20: Trommelmantelwand
- 22: erster Spannringverbund
- 24: zweiter Spannringverbund
- 40: innere Stütz-Ringplatte
- 50: innere Stütz-Ringplatte
- 60: äußere Verkleidungs-Ringplatte
- 70: äußere Verkleidungs-Ringplatte
- 75: Anschlussring
- 80: radial innerer Wellen-Kontaktring
- 84: radial äußerer Trommelstirnwand-Kontaktring
- 88: erster Pressring
- 92: zweiter Pressring
- 94: Gewindeloch
- 96: Durchgangsloch
- 98: Schraube
- 99: Funktions-Ringplatte
- 100: Abführkanal
- 102: Filterzelle
- 103: Trennleiste
- 110: innerer Stützmantel
- 120: äußerer Funktionsmantel
- 130: Filtermedium
- 136: Abführkanal-Anschlussöffnung
- 140: erstes zentrales Durchgangsloch
- 146: zweites zentrales Durchgangsloch
- 150: Dichtungseinrichtung
- 170: trommelstirnseitige Eintrittsstelle
- 176: trommelstirnseitige Eintrittsstelle
- 190: Kunststoffbeschichtung
- 196: Dichtungskörper
- 197: Dichtungsring
- 200: vernetzende Abdichtung
- 208: Dichtring
- 212: starre Ringkomponente
- 216: radial innerer, elastischer O-Ring
- 218: radial äußerer, elastischer O-Ring
- 224: radial innere Nut
- 228: radial äußere Nut
- 234: elastischer O-Ring
- 240: Wellenachse
- 300: Vakuum- und/oder Druck-Filtrationsvorrichtung
- 310: erstes Lager
- 312: zweites Lager
- 402: erstes Antriebswellenelement
- 404: zweites Antriebswellenelement

## Patentansprüche

1. Filtertrommel (10) für eine Vakuum- und/oder Druck-Filtrationsvorrichtung zum Filtern einer Suspension (S), welche Feststoff und Flüssigkeit umfasst, aufweisend:
- eine Antriebswelle (12),
- über welche die Filtertrommel (10) drehlagerbar und drehantreibbar ist,
- einen Filtertrommelkörper (14),
- der von der Antriebswelle (12) separat ausgebildet ist,
- zu welchem sich die Antriebswelle (12) zentral erstreckt und
- der eine erste (16) und eine zweite (18) Trommelstirnwand sowie eine sich zwischen der ersten (16) und der zweiten (18) Trommelstirnwand längs der Antriebswelle (12) erstreckende Trommelmantelwand (20) aufweist, über welche die erste (16) und die zweite (18) Trommelstirnwand miteinander verbunden sind, und
- einen ersten (22) und einen zweiten (24) Spannringverbund,
- von welchen jeweils zugeordnet die erste (16) und die zweite (18) Trommelstirnwand via radiales Klemmen mit der Antriebswelle (12) fest verbunden sind, sodass ein auf die Antriebswelle (12) aufgebrachtes Antriebsdrehmoment von der Antriebswelle (12) über den ersten (22) und/oder den zweiten (24) Spannringverbund jeweils korrespondierend auf die erste (16) und/oder die zweite (18) Trommelstirnwand und damit auf den Filtertrommelkörper (14) übertragbar ist.

2. Filtertrommel (10) gemäß Anspruch 1, wobei die erste (16) und die zweite (18) Trommelstirnwand jeweils aufweisen eine lasttragende, innere Stütz-Ringplatte (40, 50) und eine äußere Verkleidungs-Ringplatte (60, 70), welche von der Stütz-Ringplatte (40, 50) gestützt wird, wobei der erste (22) und der zweite (24) Spannringverbund zwischen der Antriebswelle (12) und der Stütz-Ringplatte (40, 50) der jeweils zugeordneten ersten (16) und zweiten (18) Trommelstirnwand angeordnet sind, so dass das Antriebsdrehmoment von der Antriebswelle (12) über den ersten (22) und/oder den zweiten (24) Spannringverbund auf die jeweils zugeordnete Stütz-Ringplatte (40, 50) und damit auf den Filtertrommelkörper (14) übertragen wird.

3. Filtertrommel (10) gemäß Anspruch 2, wobei eine der beiden Verkleidungs-Ringplatten (60, 70) als Funktions-Ringplatte (99) ausgebildet ist, in welcher Abführkanäle (100) zum Abführen von beim Filtern entstehendem Filtrat ausgebildet sind.

4. Filtertrommel (10) gemäß einem der Ansprüche 1 bis 3, wobei die Trommelmantelwand (20) einen lasttragenden, inneren Stützmantel (110) und einen äußeren Funktionsmantel (120) aufweist, an welchem ein Filtermedium (130) der Filtertrommel (10) angeordnet ist und über welchen ein beim Filtern entstehendes Filtrat abgeführt wird und welcher von dem Stützmantel (110) gestützt wird.

5. Filtertrommel (10) gemäß einem der vorigen Ansprüche sofern in Kombination mit Ansprüchen 2 und 4, wobei der Stützmantel (110) und die Stütz-Ringplatten (40, 50) unter Ausbildung einer lasttragenden Innenstruktur starr miteinander verbunden sind, und wobei diese lasttragende Innenstruktur von dem Funktionsmantel (120) und den Verkleidungs-Ringplatten (60, 70) nach außen hin fluiddicht eingekapselt ist, um im Filterbetrieb gegen eine Kontaktberührung mit der die Filtertrommel umgebenden Suspension (S) isoliert zu sein.

6. Filtertrommel (10) gemäß einem der vorigen Ansprüche sofern in Kombination mit den Ansprüchen 2 und 4, wobei die Verkleidungs-Ringplatten (60, 70) und der Funktionsmantel (120) aus einem anderen Material sind als die Stütz-Ringplatten (40, 50) und der Stützmantel (110).

7. Filtertrommel (10) gemäß einem der Ansprüche 1-6 sofern in Kombination mit Ansprüchen 2 und 4, wobei die Verkleidungs-Ringplatten (60, 70) und der Funktionsmantel (120) aus einem gleichen Material sind und/oder wobei die Stütz-Ringplatten (40, 50) und der Stützmantel (110) aus einem gleichen Material sind.

8. Filtertrommel (10) gemäß einem der vorigen Ansprüche sofern in Kombination mit Anspruch 5, wobei die Verkleidungs-Ringplatte (60, 70) und der Funktionsmantel (120) aus einem Kunststoffmaterial sind und/oder wobei die Stütz-Ringplatten (40, 50) und der Stützmantel (110) aus einem schweißbaren Metallmaterial sind und unter Ausbildung der lasttragenden Innenstruktur starr miteinander verschweißt sind.

9. Filtertrommel (10) gemäß einem der vorigen Ansprüche sofern in Kombination mit Anspruch 2, wobei von der Stütz-Ringplatte (40) sowie der Verkleidungs-Ringplatte (60) der ersten Trommelstirnwand (16) ein erstes zentrales Durchgangsloch (140) definiert wird und von der Stütz-Ringplatte (50) sowie der Verkleidungs-Ringplatte (70) der zweiten Trommelstirnwand (18) ein zweites zentrales Durchgangsloch (146) definiert wird, wobei das erste (140) und das zweite (146) Durchgangsloch jeweils zu der Antriebswelle (12) koaxial sind und von der Antriebswelle (12) durchdrungen werden, und wobei zwischen der Antriebswelle (12) und der Verkleidungs-Ringplatte (60, 70) sowohl der ersten (16) als auch der zweiten (18) Trommelstirnwand eine Dichtungseinrichtung (150) angeordnet ist, mittels deren die jeweilige Verkleidungs-Ringplatte (60, 70) der ersten (16) und der zweiten (18) Trommelstirnwand gegen die Antriebswelle (12) fluidabgedichtet ist, sodass die Stütz-Ringplatten (40, 50) im Filterbetrieb an jeweiligen trommelstirnseitigen Eintrittsstellen (170, 176) der Antriebswelle (12) in die Filtertrommel (10) gegen eine Kontaktberührung mit der die Filtertrommel (10) umgebenden Suspension (S) isoliert sind.

10. Filtertrommel (10) gemäß Anspruch 9, wobei die jeweilige Dichtungseinrichtung (150) von einem Dichtring (208) gebildet ist, wobei der Dichtring (208) optional eine starre Ringkomponente (212) und einen radial inneren (216) und einen radial äußeren (220), elastischen O-Ring aufweist, welche O-Ringe (216, 220) elastisch vorgespannt gegen die Antriebswelle (12) und die zugeordnete Verkleidungs-Ringplatte (60, 70) anliegen.

11. Filtertrommel (10) gemäß Anspruch 9, wobei
- die Antriebswelle (12) zumindest im Bereich jeweiliger trommelstirnseitiger Eintrittsstellen (170, 176) der Antriebswelle (12) in die Filtertrommel (10) mit einer Kunststoffbeschichtung (190) beschichtet ist, und wobei
- die jeweilige Verkleidungs-Ringplatte (60, 70) aus einem Kunststoff-Plattenmaterial gebildet ist oder mit einer Beschichtung aus Kunststoff-Plattenbeschichtungsmaterial versehen ist, und wobei
- die jeweilige Dichtungseinrichtung (150) von einem Dichtungsring (197) gebildet ist, der aus einem Kunststoff-Ringmaterial hergestellt ist oder der mit einer Beschichtung aus einem Kunststoff-Ringbeschichtungsmaterial versehen ist, und wobei
- bei der jeweiligen Dichtungseinrichtung (150) das Kunststoff-Ringmaterial oder das Kunststoff-Ringbeschichtungsmaterial mit der Kunststoffbeschichtung (190) der Antriebswelle (12) und mit dem Kunststoff-Plattenmaterial oder dem Kunststoff-Plattenbeschichtungsmaterial verschweißt ist unter Ausbildung einer nicht-lasttragenden Fluidabdichtung zwischen dem jeweiligen Dichtungsring (197) und der Antriebswelle (12) und der jeweiligen Verkleidungs-Ringplatte (60, 70).

12. Vakuum- und/oder Druck-Filtrationsvorrichtung (300) zum Filtern einer Suspension (S), welche Feststoff und Flüssigkeit umfasst, mit
- einer Filtertrommel (10) gemäß irgendeinem der vorhergehenden Ansprüche, welche mittels deren Antriebwelle (12) um eine von der Antriebswelle (12) definierte Wellenachse (240) drehgelagert ist, und
- einem Antriebsmotor (M), der mit der Antriebswelle (12) verbunden ist, wobei ein von dem Antriebsmotor (M) auf die Antriebswelle (12) aufgebrachtes Antriebsdrehmoment über den ersten (22) und/oder den zweiten (24) Spannringverbund auf den Filtertrommelkörper (14) übertragen wird.

## Claims

1. Filter drum (10) for a vacuum and/or pressure filtration device for the filtration of a suspension (S), which comprises a solid and a liquid, comprising:
- a drive shaft (12)
- via which the filter drum (10) is rotatably supportable und rotatably drivable,
- a filter drum body (14),
- which is formed in a manner separated from the drive shaft (12),
- to which the drive shaft (12) extends centrally, and
- which comprises a first (16) and a second (18) drum end wall as well as a drum jacket wall (20) which extends between the first (16) and the second (18) drum end wall along the drive shaft (12) and via which the first (16) and the second (18) drum end wall are connected to each other, and
- a first (22) and a second (24) clamping ring set
- by which the first (16) and the second (18) drum end wall, respectively, are fixedly connected to the drive shaft (12) via radial clamping so that a driving torque applied to the drive shaft (12) is transmittable from the drive shaft (12) to the first (16) and/or the second (18) drum end wall and, thereby, to the filter drum body (14), via the first (22) and/or the second (24) clamping ring set in a respectively corresponding manner.

2. Filter drum (10) according to claim 1, wherein the first (16) and the second (18) drum end wall each comprise a load-bearing inner support ring plate (40, 50) and an outer cover ring plate (60, 70) which is supported by the support ring plate (40, 50), wherein the first (22) and the second (24) clamping ring set are arranged between the drive shaft (12) and the support ring plate (40, 50) of the first (16) and second (18) drum end walls, respectively, so that, via the first (22) and/or the second (24) clamping ring set, the driving torque is transmitted from the drive shaft (12) to the corresponding support ring plate (40, 50) and, thereby, to the filter drum body (14).

3. Filter drum (10) according to claim 2, wherein one of the two cover ring plates (60, 70) is formed as a functional ring plate (99), in which discharge channels (100) for discharging a filtrate, which occurs during filtration, are formed.

4. Filter drum (10) according to one of claims 1 to 3, wherein the drum jacket wall (20) comprises a load-bearing inner support jacket (110) and an outer functional jacket (120), on which a filter medium (130) of the filter drum (10) is arranged and via which a filtrate, occurring during filtration, is discharged and which is supported by the support jacket (110).

5. Filter drum (10) according to one of the preceding claims provided that in combination with claims 2 and 4, wherein the support jacket (110) and the support ring plates (40, 50) are rigidly connected to each other to thereby form a load-bearing inner structure, and wherein this load-bearing inner structure is, by the functional jacket (120) and the cover ring plates (60, 70), encapsulated in a fluid tight manner toward the outside so as to be, during filtration operation, isolated against a touch contact with the suspension (S) which surrounds the filter drum.

6. Filter drum (10) according to one of the preceding claims provided that in combination with claims 2 and 4, wherein the cover ring plates (60, 70) and the functional jacket (120) are of a different material than the support ring plates (40, 50) and the support jacket (110).

7. Filter drum (10) according to one of claims 1-6 provided that in combination with claims 2 and 4, wherein the cover ring plates (60, 70) and the functional jacket (120) are of a same material, and/or wherein the support ring plates (40, 50) and the support jacket (110) are of a same material.

8. Filter drum (10) according to one of the preceding claims provided that in combination with claim 5, wherein the cover ring plate (60, 70) and the function jacket (120) are of a plastic material, and/or wherein the support ring plates (40, 50) and the support jacket (110) are of a weldable metal material and are rigidly welded to each other to thereby form the load-bearing inner structure.

9. Filter drum (10) according to one of the preceding claims provided that in combination with claim 2, wherein a first central through hole (140) is defined by the support ring plate (40) as well as the cover ring plate (60) of the first drum end wall (16), and a second central through hole (146) is defined by the support ring plate (50) as well as the cover ring plate (70) of the second drum end wall (18), wherein the first (140) and the second (146) through hole are respectively coaxial to the drive shaft (12) and penetrated by the drive shaft (12), and wherein a sealing device (150) is arranged between the drive shaft (12) and the cover ring plate (60, 70) of both the first (16) and the second (18) drum end wall, by which the respective cover ring plate (60, 70) of the first (16) and the second (18) drum end wall is fluidly sealed against the drive shaft (12) so that the support ring plates (40, 50), during filtration operation, are, at respective drum end face-sided entrance sites (170, 176) of the drive shaft (12) into the filter drum (10), isolated against a contact touch with the suspension (S) which surrounds the filter drum (10).

10. Filter drum (10) according to claim 9, wherein the respective sealing device (150) is formed by a sealing ring (208), wherein optionally the sealing ring (208) comprises a rigid ring component (212) and a radially inner (216) and a radially outer (220) elastic O-Ring, which O-rings (216, 220), in a manner elastically biased, abut against the drive shaft (12) and the corresponding cover ring plate (60, 70).

11. Filter drum (10) according to claim 9, wherein
- the drive shaft (12) is coated with a plastic coating (190) at least in the region of respective drum end face-sided entrance sites (170, 176) of the drive shaft (12) into the filter drum (10), and wherein
- the respective cover ring plate (60, 70) is formed of a plastic plate material or is provided with a coating of a plastic plate coating material, and wherein
- the respective sealing device (150) is formed by a sealing ring (197) which is made of a plastic ring material or which is provided with a plastic ring coating material, and wherein
- in the respective sealing device (150), the plastic ring material or the plastic ring coating material is welded to the plastic coating (190) of the drive shaft (12) and to the plastic plate material or the plastic plate coating material to thereby form a non-load-bearing fluid sealing between the respective sealing ring (197) and the drive shaft (12) and the respective cover ring plate (60, 70).

12. Vacuum and/or pressure filtration device (300) for the filtration of a suspension (S), which comprises a solid and a liquid, having
- a filter drum (10) according to any one of the preceding claims, which is, by the drive shaft (12) thereof, rotatably supported around a shaft axis (240) which is defined by the drive shaft (12), and
- a driving motor (M) which is connected to the drive shaft (12), wherein a driving torque applied to the drive shaft (12) by the driving motor (M) is transmitted to the filter drum body (14) via the first (22) and/or the second (24) clamping ring set.

## Revendications

1. Tambour filtrant (10) pour un dispositif de filtration sous vide et/ou sous pression pour filtrer une suspension (S), laquelle comprend une matière solide et un liquide, présentant :
- un arbre d'entraînement (12),
- par l'intermédiaire duquel le tambour filtrant (10) peut être monté en rotation et peut être entraîné en rotation,
- un corps de tambour filtrant (14),
- qui est réalisé séparément de l'arbre d'entraînement (12),
- par rapport auquel l'arbre d'entraînement (12) s'étend de manière centrale et
- qui présente une première (16) et une deuxième (18) paroi frontale de tambour ainsi qu'une paroi d'enveloppe de tambour (20) s'étendant entre la première (16) et la deuxième (18) paroi frontale de tambour le long de l'arbre d'entraînement (12), par l'intermédiaire de laquelle la première (16) et la deuxième (18) paroi frontale de tambour sont reliées l'une à l'autre, et
- un premier (22) et un deuxième (24) ensemble de bague de serrage,
- par lesquels la première (16) et la deuxième (18) paroi frontale de tambour respectivement associée sont reliées fixement à l'arbre d'entraînement (12) par le biais d'un serrage radial, de sorte qu'un couple d'entraînement appliqué à l'arbre d'entraînement (12) peut être transmis à partir de l'arbre d'entraînement (12) par l'intermédiaire du premier (22) et/ou du deuxième (24) ensemble de bague de serrage respectivement de manière correspondante à la première (16) et/ou la deuxième (18) paroi frontale de tambour et donc au corps de tambour filtrant (14).

2. Tambour filtrant (10) selon la revendication 1, dans lequel la première (16) et la deuxième (18) paroi frontale de tambour présentent chacune une plaque annulaire d'appui (40, 50) intérieure supportant la charge et une plaque annulaire de revêtement (60, 70) extérieure, laquelle est soutenue par la plaque annulaire d'appui (40, 50), dans lequel le premier (22) et le deuxième (24) ensemble de bague de serrage sont disposés entre l'arbre d'entraînement (12) et la plaque annulaire d'appui (40, 50) de la première (16) et deuxième (18) paroi frontale de tambour respectivement associée, de sorte que le couple d'entraînement est transmis de l'arbre d'entraînement (12) par l'intermédiaire du premier (22) et/ou du deuxième (24) ensemble de bague de serrage à la plaque annulaire d'appui (40, 50) respectivement associée et donc au corps de tambour filtrant (14).

3. Tambour filtrant (10) selon la revendication 2, dans lequel une des deux plaques annulaires de revêtement (60, 70) est réalisée en tant que plaque annulaire fonctionnelle (99), dans laquelle des canaux d'évacuation (100) pour évacuer le filtrat produit lors de la filtration sont réalisés.

4. Tambour filtrant (10) selon l'une quelconque des revendications 1 à 3, dans lequel la paroi d'enveloppe de tambour (20) présente une enveloppe d'appui (110) intérieure supportant la charge et une enveloppe fonctionnelle (120) extérieure, sur laquelle est disposé un milieu filtrant (130) du tambour filtrant (10) et par l'intermédiaire de laquelle un filtrat produit lors de la filtration est évacué et laquelle est soutenue par l'enveloppe d'appui (110).

5. Tambour filtrant (10) selon l'une quelconque des revendications précédentes prise en combinaison avec les revendications 2 et 4, dans lequel l'enveloppe d'appui (110) et les plaques annulaires d'appui (40, 50) sont reliées rigidement les unes aux autres pour former une structure intérieure supportant la charge, et dans lequel cette structure intérieure supportant la charge est encapsulée de manière étanche au fluide vis-à-vis de l'extérieur par l'enveloppe fonctionnelle (120) et les plaques annulaires de revêtement (60, 70), afin en mode filtration d'être isolée du contact avec la suspension (S) entourant le tambour filtrant.

6. Tambour filtrant (10) selon l'une quelconque des revendications précédentes prise en combinaison avec les revendications 2 et 4, dans lequel les plaques annulaires de revêtement (60, 70) et l'enveloppe fonctionnelle (120) sont composées d'un autre matériau que les plaques annulaires d'appui (40, 50) et que l'enveloppe d'appui (110).

7. Tambour filtrant (10) selon l'une quelconque des revendications 1-6 prise en combinaison avec les revendications 2 et 4, dans lequel les plaques annulaires de revêtement (60, 70) et l'enveloppe fonctionnelle (120) sont composées d'un même matériau et/ou dans lequel les plaques annulaires d'appui (40, 50) et l'enveloppe d'appui (110) sont composées d'un même matériau.

8. Tambour filtrant (10) selon l'une quelconque des revendications précédentes prise en combinaison avec la revendication 5, dans lequel la plaque annulaire de revêtement (60, 70) et l'enveloppe fonctionnelle (120) sont composées d'une matière plastique et/ou dans lequel les plaques annulaires d'appui (40, 50) et l'enveloppe d'appui (110) sont composées d'un matériau métallique soudable et sont soudées rigidement les unes aux autres pour former la structure intérieure supportant la charge.

9. Tambour filtrant (10) selon l'une quelconque des revendications précédentes prise en combinaison avec la revendication 2, dans lequel un premier trou débouchant central (140) est défini par la plaque annulaire d'appui (40) ainsi que la plaque annulaire de revêtement (60) de la première paroi frontale de tambour (16) et un deuxième trou débouchant central (146) est défini par la plaque annulaire d'appui (50) ainsi que la plaque annulaire de revêtement (70) de la deuxième paroi frontale de tambour (18), dans lequel le premier (140) et le deuxième (146) trou débouchant sont chacun coaxiaux avec l'arbre d'entraînement (12) et sont traversés par l'arbre d'entraînement (12), et dans lequel un dispositif d'étanchéité (150), au moyen duquel la plaque annulaire de revêtement (60, 70) respective de la première (16) et de la deuxième (18) paroi frontale de tambour est étanchéifiée de manière fluidique vis-à-vis de l'arbre d'entraînement (12), est disposé entre l'arbre d'entraînement (12) et la plaque annulaire de revêtement (60, 70) aussi bien de la première (16) que de la deuxième (18) paroi frontale de tambour, de sorte que dans le mode filtration, les plaques annulaires d'appui (40, 50) sont isolées vis-à-vis d'un contact avec la suspension (S) entourant le tambour filtrant (10) au niveau des points d'entrée (170, 176) respectifs côté frontal de tambour de l'arbre d'entraînement (12) dans le tambour filtrant (10).

10. Tambour filtrant (10) selon la revendication 9, dans lequel le dispositif d'étanchéité (150) respectif est formé par une bague d'étanchéité (208), dans lequel la bague d'étanchéité (208) présente éventuellement un composant annulaire rigide (212), un joint torique élastique radialement intérieur (216) et un joint torique élastique radialement extérieur (220), lesquels joints toriques (216, 220) s'appliquent de manière précontrainte élastiquement contre l'arbre d'entraînement (12) et la plaque annulaire de revêtement (60, 70) associée.

11. Tambour filtrant (10) selon la revendication 9, dans lequel
- l'arbre d'entraînement (12) est revêtu au moins dans la zone de points d'entrée (170, 176) respectifs côté frontal de tambour de l'arbre d'entraînement (12) dans le tambour filtrant (10) d'un revêtement de matière plastique (190), et dans lequel
- la plaque annulaire de revêtement (60, 70) respective est formée d'un matériau en plaque en matière plastique ou pourvue d'un revêtement composé d'un matériau de revêtement en plaque en matière plastique, et dans lequel
- le dispositif d'étanchéité (150) respectif est formé par une bague d'étanchéité (197), qui est fabriquée à partir d'un matériau annulaire en matière plastique ou qui est pourvue d'un revêtement composé d'un matériau de revêtement annulaire en matière plastique, et dans lequel
- pour le dispositif d'étanchéité (150) respectif, le matériau annulaire en matière plastique ou le matériau de revêtement annulaire en matière plastique est soudé au revêtement de matière plastique (190) de l'arbre d'entraînement (12) et au matériau en plaque en matière plastique ou au matériau de revêtement en plaque en matière plastique pour former une étanchéité fluidique ne supportant pas la charge entre la bague d'étanchéité (197) respective et l'arbre d'entraînement (12) et la plaque annulaire de revêtement (60, 70) respective.

12. Dispositif de filtration sous vide et/ou sous pression (300) pour filtrer une suspension (S), lequel comprend une matière solide et un liquide, avec
- un tambour filtrant (10) selon l'une quelconque des revendications précédentes, lequel est monté au moyen de son arbre d'entraînement (12) de manière à pouvoir tourner autour d'un axe d'arbre (240) défini par l'arbre d'entraînement (12), et
- un moteur d'entraînement (M), qui est relié à l'arbre d'entraînement (12), dans lequel un couple d'entraînement appliqué par le moteur d'entraînement (M) à l'arbre d'entraînement (12) est transmis au corps de tambour filtrant (14) par l'intermédiaire du premier (22) et/ou du deuxième (24) ensemble de bague de serrage.
